# EUROPÄISCHE PATENTANMELDUNG

(11) **EP 1 025 984 A1**
(43) Veröffentlichungstag der Anmeldung: **09.08.2000**
(21) Anmeldenummer: 99101989.4
(22) Anmeldetag: 01.02.1999
(51) Int. Cl.: B30B 9/12, B30B 9/26, B30B 9/18, B65G 33/22

(54) **Förderpresse**

(71) Anmelder: Bormet Maschinenbau GmbH, 64331 Weiterstadt (DE)
(72) Erfinder: Aan de Stegge, Alex, 7471 TA Goor (NL)
(74) Vertreter: Gornott, Dietmar, Dipl.-Ing.

(57) **Zusammenfassung**

Bei einer Vorrichtung zum Fördern, Pressen und Entwässern von kompaktierbarem Material mit einem Axialförderer (5), der zumindest teilweise in einem über das Ende des Axialförderers (5) unter Bildung einer Preßzone hinausreichenden Gehäuse angeordnet ist, welches am Ende der Preßzone (9) eine Widerstandsvorrichtung aufweist, die das Material an der Weiterförderung behindert, so daß das Material durch nachgefördertes Material zusammengepreßt wird und welches zur Ableitung des dabei freigesetzten Wassers Wasseraustrittsöffnungen (7a) aufweist sind die Wasseraustrittsöffnungen (7a) entgegen der Förderrichtung in einem Abstand vor der Preßzone angeordnet. Wenigstens derjenige Bereich des Gehäuses, der zwischen den Wasseraustrittsöffnungen (7a) und dem Beginn der Preßzone (9) liegt, weist zum Zwecke der Ableitung von Wasser an die Wasseraustrittsöffnungen (7a) einen gegenüber dem Axialförderer vergrößerten Querschnitt auf. Die Widerstandsvorrichtung besteht aus einer durch den Druck des gepreßten Materials dehnbaren Querschnittsverengung (10) des Gehäuses, welche am Ende der Preßzone angeordnet ist.

## Beschreibung

Die Erfindung betrifft eine Vorrichtung zum Fördern, Pressen und Entwässern von kompaktierbarem Material mit einem Axialförderer, der zumindest teilweise in einem über das Ende des Axialförderers unter Bildung einer Preßzone hinausreichenden Gehäuse angeordnet ist, welches am Ende der Preßzone eine Widerstandsvorrichtung aufweist, die das Material an der Weiterförderung behindert, so daß das Material durch nachgefördertes Material zusammengepreßt wird und welches zur Ableitung des dabei freigesetzten Wassers Wasseraustrittsöffnungen aufweist.

Zur Entwässerung von kompaktierbarem Rechengut - im folgenden auch Material genannt - aus Kläreinrichtungen für Abwasser und dergleichen kommen vielfach Schneckenförderer zum Einsatz, die das Rechengut in einem Gehäuse zu einer Preßzone fördern und dort gegen den Widerstand einer am Ende der Preßzone befindlichen Klappe oder dergleichen zusammenpressen. Das dadurch freigesetzte Wasser kann durch im Mantel des Gehäuses im Bereich der Preßzone angebrachte Wasseraustrittslöcher entweichen. In EP 0 179 842 ist eine derartige Förderpresse beschrieben. Die Preßzone schließt unmittelbar an das Förderende an. Das Rechengut wird durch ein am Ende der Preßzone angebrachtes Widerstandselement, beispielsweise durch federbelastete Klappen, bis zum Erreichen eines bestimmten Druckes in der Preßzone zurückgehalten. Durch das kontinuierlich nachgeförderte Material wird das in der Preßzone befindliche Rechengut zusammengepreßt bis der bestimmte Druck erreicht wird. Das Widerstandselement gibt daraufhin den Inhalt der Preßzone frei. Die Förderschnecke fördert kontinuierlich. Die Abgabe von Preßgut erfolgt portionsweise.

Wasserunlösliche, pastöse Inhaltsstoffe des Rechengutes, wie Fett oder wachsartige Substanzen, werden durch den Preßvorgang ebenfalls ausgepreßt und verstopfen in der Folge die Wasseraustrittslöcher. Das Preßgut wird nicht richtig entwässert. Bei bekannten Vorrichtungen wird daher derjenige Teil des Wassers, der nicht abfließen konnte, beim Ausschieben des Preßgutes mitgenommen, so daß letztlich die Vorrichtung ihren Zweck nur erfüllen kann, wenn sie regelmäßig gereinigt wird.

Aufgabe der vorliegenden Erfindung ist es, eine Vorrichtung anzugeben, welche das vorgenannte Problem behebt.

Diese Aufgabe wird dadurch gelöst, daß die Wasseraustrittsöffnungen entgegen der Förderrichtung in einem Abstand vor der Preßzone angeordnet sind und daß wenigstens derjenige Bereich des Gehäuses, der zwischen den Wasseraustrittsöffnungen und dem Beginn der Preßzone liegt, zum Zwecke der Ableitung von Wasser an die Wasseraustrittsöffnungen einen gegenüber dem Axialförderer vergrößerten Querschnitt aufweist. Da die Preßzone von einem geschlossenen Mantel umgeben ist, können die pastösen Bestandteile des Preßgutes nicht entweichen und können somit die entfernt liegenden Wasseraustrittslöcher nicht zusetzen. Der erweiterte Querschnitt des Gehäuses wird durch den Axialförderer locker mit Material aufgefüllt. Die vorzugsweise ringförmig um den Axialförderer liegende Querschnittserweiterung nimmt das ausgepreßte Wasser auf und leitet es entgegen der Förderrichtung außen an dem Axialförderer vorbei zu den Wasseraustrittsöffnungen. Dabei hält das im erweiterten Querschnitt enthaltene Material wie ein Filter die pastösen Bestandteile zurück. Durch die Förderbewegung des Axialförderers wird das im erweiterten Querschnitt enthaltene Material ständig ausgetauscht und kann daher die Wasseraustrittsöffnungen nicht zusetzen. An den Wasseraustrittsöffnungen steht schließlich nur das ausgepreßte Wasser an.

Bei einer ersten Ausgestaltung der Erfindung ist vorgesehen, daß der Axialförderer eine Förderschnecke ist.

Um eine mechanische Entlastung und Flexibilisierung der Förderschnecke zu erreichen, kann vorgesehen sein, daß die Förderschnecke wellenlos und im Zentrum offen ist, d.h., daß die Förderschnecke als selbsttragende Wendel um einen leeren Kern rotiert. Durch die offene Bauweise vermag die Förderschnecke auch grobe Stücke oder faseriges Material zu fördern, ohne daß die Wendel beschädigt wird oder die Schnecke verstopft, da das Fördergut nötigenfalls in den freien Kern der Förderschnecke ausweichen kann. Faseriges Material kann sich ferner nicht um die Schnecke herumwickeln.

Es ist vorteilhaft, wenn die Förderschnecke am Eintrittsende fliegend gelagert ist. Dadurch kann die Förderschnecke seitlich ausweichen, wenn sich grobe Stücke Förderguts an der Schneckenwendel verklemmen. Beschädigungen der Vorrichtung werden auf diese Weise vermieden.

Um den ständigen Austausch des in dem erweiterten Querschnitt enthaltenen Materials zu vereinfachen, ist bei einer nächsten Ausgestaltung der Erfindung vorgesehen, daß der Bereich, in dem der Querschnitt vergrößert ist, bis zum Ende der Preßzone reicht, oder daß der erweiterte Querschnitt der Preßzone in den übrigen Querschnitt der Preßzone sanft übergeht.

Bei einer weiteren Ausgestaltung der Erfindung ist vorgesehen, daß das Gehäuse vom Endbereich der Förderschnecke an bis wenigstens teilweise in die Preßzone hinein einen gegenüber dem Gehäuse der Förderschnecke vergrößerten Durchmesser aufweist und daß im Endbereich der Förderschnecke an der Innenseite des erweiterten Gehäuses im wesentlichen längs angeordnete Gleitstücke zur Abstützung des Austrittsendes der Förderschnecke unter Bildung längs verlaufender Kanäle angeordnet sind, welche die Preßzone mit den Wasseraustrittsöffnungen verbinden. Die längs verlaufenden Gleitstücke sind zur Führung um die Förderschnecke herum angeordnet. Das freigesetzte Wasser kann entlang der dazwischen befindlichen Kanäle zu den Wasseraustrittsöffnungen abfließen. Die Kanäle sind locker mit dem kompaktierbaren Material gefüllt, welches durch die Förderbewegung ständig ausgetauscht wird. Dadurch können sich die Kanäle nicht mit Fett und anderen pastösen Bestandteilen aus dem Preßgut zusetzen und bleiben für das abfließende Wasser durchlässig.

Bei weiteren Ausgestaltungen der Erfindung ist vorgesehen, daß der im Querschnitt vergrößerte Teil des Gehäuses unter Bildung wenigstens einer stirnseitigen Wasseraustrittsöffnung an den im Querschnitt kleineren Teil anschließt, bzw. daß der im Querschnitt vergrößerte Teil des Gehäuses an seinem Außenmantel Wasserdurchtrittslöcher aufweist.

Zur Verringerung der Wartungsanfälligkeit und zur Verbilligung der Vorrichtung kann vorgesehen sein, daß die Widerstandsvorrichtung aus einer durch den Druck des gepreßten Materials dehnbaren Querschnittsverengung des Gehäuses besteht, welche am Ende der Preßzone angeordnet ist.

Dazu ist bei einer nächsten Ausgestaltung der Erfindung vorgesehen, daß die Querschnittsverengung durch eine flexible Manschette erzeugt wird, welche am Ende der Preßzone quer zur Förderrichtung angeordnet ist. Es kann dabei vorgesehen sein, daß die Manschette aus Gummi besteht. Die Manschette kann gegen das Ende der Preßzone geschraubt oder in eine umlaufende Nut am Ende der Preßzone eingesetzt sein. Die Manschette bewirkt eine ringförmige Verengung des Querschnitts der Preßzone. Das grobe Preßgut staut sich vor dieser Verengung und wird von dem nachgeförderten Material zusammengepreßt. Bei Überschreiten eines gewissen Preßdrucks wird die Manschette gedehnt und das Preßgut wird durch die gedehnte Öffnung der Manschette gedrückt. Dabei wird überschüssiges Wasser vom Preßgut abgestreift und in der Preßzone zurückbehalten, von wo es zu den Wasseraustrittsöffnungen fließt.

Bei einer Weiterbildung der Erfindung ist vorgesehen, daß der innere Rand der Manschette zur Erhöhung der Nachgiebigkeit geschlitzt ist.

Um zu vermeiden, daß überschüssiges Wasser in dem Preßgut zurückbleibt, ist bei einer Weiterbildung der Erfindung vorgesehen, daß die Manschette wenigstens in ihrem unteren Bereich an das Gehäuse wasserdicht anschließt.

Um ferner zu gewährleisten, daß das Preßgut kein überschüssiges Wasser aus der Preßzone wieder aufsaugt, ist bei einer nächsten Weiterbildung der Erfindung vorgesehen, daß der innere Rand der Manschette exzentrisch nach oben versetzt ist. Dadurch wird das Preßgut beim Ausschieben von dem noch in der Preßzone befindlichen Wasser ferngehalten. Beim Ausschieben des Preßgutes durch die Manschette wird das Wasser somit zurückgehalten und nicht, wie dies anderenfalls geschehen kann, durch das Preßgut mitgerissen.

Aus Sicherheitsgründen kann vorgesehen sein, daß am Austritt der gesamten Vorrichtung wenigstens eine selbsttätig schließende Klappe angeordnet ist.

Um eine Vorabentwässerung des Materials vor dem Pressen zu ermöglichen, kann vorgesehen sein, daß das Gehäuse über Teile seiner gesamten Länge wasserdurchlässige Bereiche zur Vorabentwässerung des Materials während der Förderung sowie Bürsten aufweist, welche zur Freihaltung der wasserdurchlässigen Bereiche am Umfang des Axialförderers angeordnet sind. Da das Material während der Förderung noch nicht gepreßt wird, besteht in diesen Bereichen noch nicht die Gefahr des Verstopfens durch pastöse Bestandteile.

Ausführungsbeispiele der Erfindung sind in der Zeichnung anhand mehrerer Figuren dargestellt und in der nachfolgenden Beschreibung näher erläutert. Es zeigt:
- Fig. 1: eine erfindungsgemäße Förderpresse im Längsschnitt,
- Fig. 2: eine Förderpresse nach dem Stand der Technik mit vergrößerter Darstellung der Wasseraustrittsöffnungen im Längsschnitt,
- Fig. 3: eine Schnittdarstellung der erfindungsgemäßen Förderpresse und
- Fig. 4: eine Detailansicht der Preßzone der erfindungsgemäßen Förderpresse.

Gleiche Teile sind in den Figuren mit gleichen Bezugszeichen versehen.

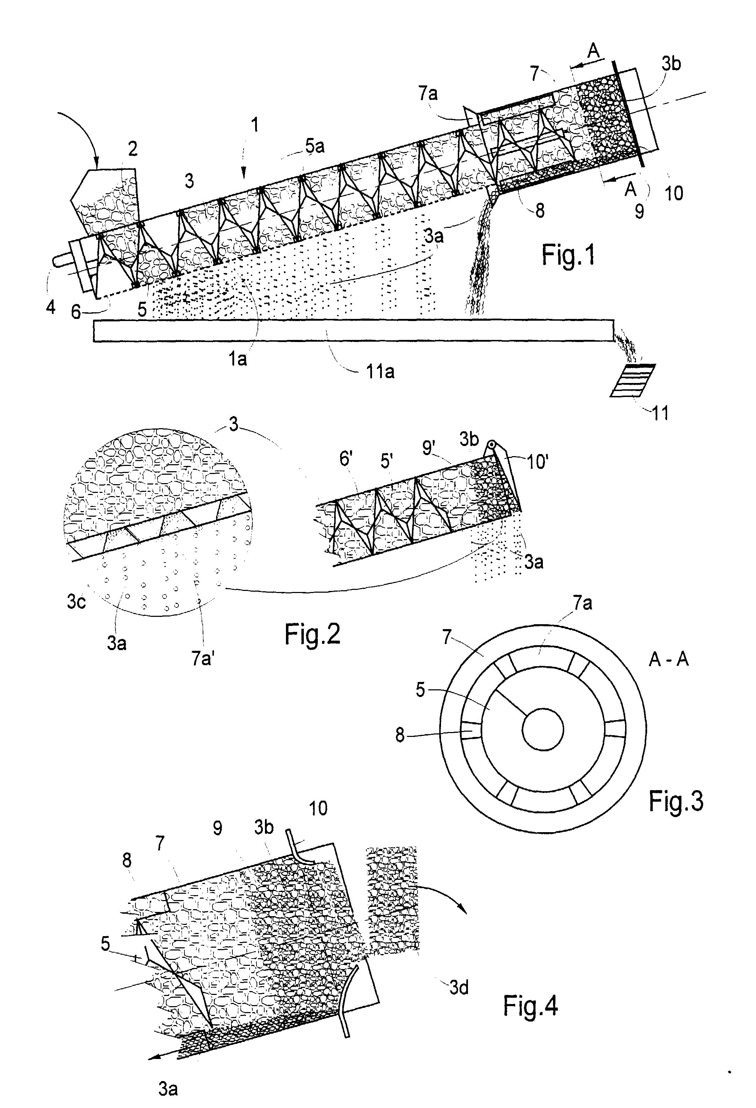

Fig. 2 zeigt den Längsschnitt einer Förderpresse nach dem Stand der Technik im Detail. Es ist ein Teil einer Förderschnecke 5' dargestellt, die in einem Fördergehäuse 6' angeordnet ist. Das Preßgut 3b wird durch nachgefördertes Material 3 gegen den Widerstand einer federbelasteten Klappe 10' am Ende der Preßzone 9' zusammengepreßt. Im Bereich der Preßzone 9' ist das Fördergehäuse 6' am Umfang mit Löchern 7a' versehen, so daß aus dem Preßgut 3b austretendes Wasser 3a ablaufen kann. Durch in dem Preßgut 3b enthaltenes Fett 3c oder andere wasserunlösliche pastöse Bestandteile verstopfen die Löcher 7a' jedoch sehr schnell. Dadurch kann das Preßgut nicht mehr genügend entwässert werden. Ferner wird ein Teil des ausgepreßten Wassers 3a durch das durch die Klappe 10' austretende Preßgut 3b mitgerissen.

Fig. 1 zeigt den Längsschnitt einer erfindungsgemäßen Vorrichtung 1 mit einem Einfülltrichter 2 für das zu kompaktierende Rechengut 3 einer Kläreinrichtung, einer von einem Elektromotor 4 antreibbaren offenen Förderschnecke 5, die in einem Fördergehäuse 6 angeordnet ist, einem an das Fördergehäuse 6 anschließenden, im Querschnitt erweiterten Gehäuseteil 7 mit Wasseraustrittsöffnungen 7a und Gleitstücken 8 zur Abstützung des Endteils der Förderschnecke 5, sowie einer Preßzone 9, die von einer ringförmigen Gummimanschette 10 abgeschlossen wird. Das von der Vorrichtung 1 ausgepreßte sowie das durch Lochbleche 1a im Fördergehäuse abgeführte Wasser 3a ist über eine Auffangrinne 11a einem Ablauf 11 zuführbar.

Das zu fördernde Rechengut 3 wird durch den Trichter 2 eingefüllt und von der rotierenden Förderschnecke 5 nach oben gefördert. Die Förderschnecke ist innen hohl. Dadurch ist sie in der Lage, auch grobes Material fördern zu können. Bei der Förderung wird das Rechengut 3 durch Schlitze oder Löcher 1a an der Unterseite des Fördergehäuses 6 vorentwässert. Zur Freihaltung der Schlitze 1a sind Bürsten 5a an der Förderschnecke vorgesehen. Das Ende der Förderschnecke 5 wird kreisförmig in dem erweiterten Teil 7 des Gehäuses von Gleitstücken 8 unterstützt. Das von der Förderschnecke nachgeförderte Material 3 wird gegen den Widerstand der Ringmanschette 10 zusammengedrückt. Das dadurch austretende Wasser 3a fließt nach hinten ab.

Der Querschnitt der Wasseraustrittsöffnungen 7a entspricht, wie in Fig. 3 dargestellt ist, dem Querschnitt der zwischen den Gleitstücken 8 gebildeten Kanäle. Der Zwischenraum zwischen den Gleitstücken wird durch die Fördertätigkeit lose mit Fördermaterial 3 aufgefüllt, welches durch die Förderbewegung ständig erneuert wird. Die mit Fördermaterial 3 angefüllten Zwischenräume zwischen den Gleitstücken 8 fungieren als Filter und halten pastöse Bestandteile 3c im Preßgut 3b fest, so daß die Wasseraustrittsöffnungen 7a nicht verstopfen.

In Fig. 4 ist der Austrittsteil der erfindungsgemäßen Vorrichtung nach Fig. 1 detailliert während des Pressens dargestellt. Das in der Preßzone 9 befindliche Preßgut 3b wird durch von der Förderschnecke kontinuierlich nachgefördertes Material gegen den Widerstand der exzentrisch nach oben versetzt angeordneten ringförmigen Gummimanschette 10 zusammengepreßt. Bei Erreichen eines gewissen Drucks weitet sich die Manschette 10. Das Preßgut 3b wird durch die Manschette 10 hindurchgezwängt und dabei vollends entwässert. Es fällt am Austritt hinter der Manschette 10 in Stücken 3d ab. Das während des Pressens aus dem Preßgut 3b austretende Wasser 3a fließt durch das zwischen den Gleitstücken 8 lose befindliche Fördermaterial 3 nach hinten zu den Wasseraustrittsöffnungen 7a ab. Durch die exzentrische Anordnung der Manschette 10 wird vermieden, daß das abfließende Wasser 3a durch das austretende Preßgut 3b mitgerissen wird. Selbst bei hohem Feuchtigkeitsgehalt des Fördermaterials 3 kann damit eine gründliche Entwässerung gewährleistet werden. Im Preßgut befindliche pastöse Bestandteile 3c können durch diese Anordnung nicht entweichen und verbleiben im Preßgut. Die Wasseraustrittsöffnungen verstopfen nicht.

## Patentansprüche

1. Vorrichtung zum Fördern, Pressen und Entwässern von kompaktierbarem Material mit einem Axialförderer, der zumindest teilweise in einem über das Ende des Axialförderers unter Bildung einer Preßzone hinausreichenden Gehäuse angeordnet ist, welches am Ende der Preßzone eine Widerstandsvorrichtung aufweist, die das Material an der Weiterförderung behindert, so daß das Material durch nachgefördertes Material zusammengepreßt wird und welches zur Ableitung des dabei freigesetzten Wassers Wasseraustrittsöffnungen aufweist, dadurch gekennzeichnet, daß die Wasseraustrittsöffnungen (7a) entgegen der Förderrichtung in einem Abstand vor der Preßzone (9) angeordnet sind und daß wenigstens derjenige Bereich (7) des Gehäuses, der zwischen den Wasseraustrittsöffnungen (7a) und dem Beginn der Preßzone (9) liegt, zum Zwecke der Ableitung von Wasser (3a) an die Wasseraustrittsöffnungen (7a) einen gegenüber dem Axialförderer vergrößerten Querschnitt aufweist.

2. Vorrichtung nach Anspruch 1, dadurch gekennzeichnet, daß der Axialförderer eine Förderschnecke ist.

3. Vorrichtung nach Anspruch 1, dadurch gekennzeichnet, daß die Förderschnecke (5) wellenlos und im Zentrum offen ist.

4. Vorrichtung nach einem der Ansprüche 2 oder 3, dadurch gekennzeichnet, daß die Förderschnecke (5) am Eintrittsende fliegend gelagert ist.

5. Vorrichtung nach einem der Ansprüche 1 bis 4, dadurch gekennzeichnet, daß der Bereich (7), in dem der Querschnitt vergrößert ist, bis zum Ende der Preßzone (9) reicht.

6. Vorrichtung nach einem der Ansprüche 1 bis 4, dadurch gekennzeichnet, daß der erweiterte Querschnitt der Preßzone in den übrigen Querschnitt der Preßzone sanft übergeht.

7. Vorrichtung nach einem der Ansprüche 2 bis 4, dadurch gekennzeichnet, daß das Gehäuse (7) vom Endbereich der Förderschnecke (5) an bis wenigstens teilweise in die Preßzone (9) hinein einen gegenüber dem Gehäuse (6) der Förderschnecke (5) vergrößerten Durchmesser aufweist und daß im Endbereich der Förderschnecke (5) an der Innenseite des erweiterten Gehäuses (7) im wesentlichen längs angeordnete Gleitstücke (8) zur Abstützung des Austrittsendes der Förderschnecke (5) unter Bildung längs verlaufender Kanäle angeordnet sind, welche die Preßzone (9) mit den Wasseraustrittsöffnungen (7a) verbinden.

8. Vorrichtung nach einem der vorhergehenden Ansprüche, dadurch gekennzeichnet, daß der im Querschnitt vergrößerte Teil (7) des Gehäuses unter Bildung wenigstens einer stirnseitigen Wasseraustrittsöffnung (7a) an den im Querschnitt kleineren Teil (6) anschließt.

9. Vorrichtung nach einem der vorhergehenden Ansprüche, dadurch gekennzeichnet, daß der im Querschnitt vergrößerte Teil des Gehäuses an seinem Außenmantel Wasserdurchtrittslöcher aufweist.

10. Vorrichtung zum Fördern, Pressen und Entwässern von kompaktierbarem Material mit einem Axialförderer, der zumindest teilweise in einem über das Ende des Axialförderers unter Bildung einer Preßzone hinausreichenden Gehäuse angeordnet ist, welches am Ende der Preßzone eine Widerstandsvorrichtung aufweist, die das Material an der Weiterförderung behindert, so daß das Material durch nachgefördertes Material zusammengepreßt wird und welches zur Ableitung des dabei freigesetzten Wassers Wasseraustrittsöffnungen aufweist, dadurch gekennzeichnet, daß die Widerstandsvorrichtung aus einer durch den Druck des gepreßten Materials (3b) dehnbaren Querschnittsverengung des Gehäuses besteht, welche am Ende der Preßzone (9) angeordnet ist.

11. Vorrichtung nach Anspruch 10, dadurch gekennzeichnet, daß die Querschnittsverengung durch eine flexible Manschette (10) erzeugt wird, welche am Ende der Preßzone quer zur Förderrichtung angeordnet ist.

12. Vorrichtung nach Anspruch 11, dadurch gekennzeichnet, daß die Manschette (10) aus Gummi besteht.

13. Vorrichtung nach Anspruch 11, dadurch gekennzeichnet, daß der innere Rand der Manschette zur Erhöhung der Nachgiebigkeit geschlitzt ist.

14. Vorrichtung nach Anspruch 11, dadurch gekennzeichnet, daß die Manschette (10) wenigstens in ihrem unteren Bereich an das Gehäuse (7) wasserdicht anschließt.

15. Vorrichtung nach Anspruch 11, dadurch gekennzeichnet, daß der innere Rand der Manschette (10) exzentrisch nach oben versetzt ist.

16. Vorrichtung nach einem der vorhergehenden Ansprüche, dadurch gekennzeichnet, daß am Austritt der gesamten Vorrichtung wenigstens eine selbsttätig schließende Klappe angeordnet ist.

17. Vorrichtung nach einem der vorhergehenden Ansprüche, dadurch gekennzeichnet, daß das Gehäuse (6) über Teile seiner gesamten Länge wasserdurchlässige Bereiche (1a) zur Vorabentwässerung des Materials (3) während der Förderung sowie Bürsten (5a) aufweist, welche zur Freihaltung der wasserdurchlässigen Bereiche (1a) am Umfang des Axialförderers (5) angeordnet sind.
